# EUROPÄISCHE PATENTSCHRIFT

(11) **EP 2 032 278 B1**
(45) Veröffentlichungstag und Bekanntmachung des Hinweises auf die Patenterteilung: **30.12.2009**
(21) Anmeldenummer: 07703452.8
(22) Anmeldetag: 14.02.2007
(51) Int. Cl.: B21D 28/28, B21D 26/02, B23K 11/00, B23K 11/30

(54) **VERFAHREN UND VORRICHTUNG ZUR HERSTELLUNG EINER SCHRAUBVERBINDUNGSSTELLE**
METHOD AND DEVICE FOR PRODUCING A SCREW CONNECTION POINT
Procédé et dispositif pour la réalisation d'un point d'assemblage par vissage

(30) Priorität: 23.06.2006 DE 102006028773
(43) Veröffentlichungstag der Anmeldung: 11.03.2009
(73) Patentinhaber: Daimler AG, 70327 Stuttgart (DE)
(72) Erfinder: DUDZIAK, Kai-Uwe, 21435 Stelle (DE); FALKE, Jürgen, 25462 Rellingen (DE); GRAF, Denis, 25462 Rellingen (DE); KÖLLN, Jörg, 21629 Neu Wulmstorf (DE); LANGWALDT, Silke, 21224 Rosengarten (DE); MARTENS, Rüdiger, 22083 Hamburg (DE); SCHULT, Jens, 21435 Stelle (DE)
(74) Vertreter: JENSEN & SON
(86) Internationale Anmeldenummer: PCT/EP2007/001264
(87) Internationale Veröffentlichungsnummer: WO 2007/147453

(56) Entgegenhaltungen:
- WO-A-02/34425
- DE-A1- 19 508 632
- DE-A1- 19 733 477
- JP-A- 2003 334 625
- JP-A- 2005 052 950
- US-A- 4 020 316

## Beschreibung

Die Erfindung betrifft ein Verfahren zur Herstellung einer Schraubverbindungsstelle gemäß dem Oberbegriff des Patentanspruches 1 sowie eine Vorrichtung zu dessen Durchführung gemäß dem Oberbegriff des Patentanspruches 7.

Ein gattungsgemäßes Verfahren beziehungsweise eine gattungsgemäße Vorrichtung ist aus der DE 197 33 477 A1 bekannt. Hierbei ist in ein Innenhochdruckumformwerkzeug ein Stempel integriert, welcher eine zentrische Bohrung aufweist, in der ein Stanzstempel geführt ist. Der Stanzstempel ragt mit seinem freien Ende über das Ende des ihn aufnehmenden Stempels hinaus, wobei auf das Ende des Stanzstempels ein Anbauteil mit einer Durchgangsöffnung aufgefädelt ist. Das freie Ende schließt in Nichtgebrauchsstellung des Stanzstempels mit der Seite des Anbauteils, die vom aufnehmenden Stempel abgewandt ist, bündig ab. Der Stempel seinerseits ist einer Führungsbohrung im Innenhochdruckumformwerkzeug verschiebbar geführt, welche in die Gravur des Umformwerkzeuges, welche einen Formraum begrenzt, einmündet. In den Formraum ist ein Hohlprofilrohling eingebracht, der nach Schließen des Innenhochdruckumformwerkzeuges mittels Erzeugung eines fluidischen Innenhochdrucks aufgeweitet wird, bis er sich konturgetreu unter Bildung der gewünschten Form des Hohlprofils an die Gravur des Innenhochdruckumformwerkzeuges anlegt. Der Stempel wird nun gemeinsam mit dem Lochstempel und dem Anbauteil zum Hohlprofil hin verfahren, wodurch dieses unter Ausbildung einer Tasche eingedrückt wird, die in etwa die Maße des Anbauteils besitzt. Durch den immer noch wirkenden fluidischen Innenhochdruck legt sich die Hohlprofilwandung innig an der Außenseite des Anbauteils an und verklemmt dieses in der Hohlprofilwandung. Schließlich wird in der eingenommenen Stellung des aufnehmenden Stempels der Lochstempel weiter nach vorne gefahren, wodurch das Hohlprofil durch das ein Innengewinde tragende Anbauteil hindurch gelocht wird. Der Lochbutzen fällt in das Innere des Hohlprofils.

Ein derartig an ein Hohlprofil gefügtes Anbauteil ist jedoch gegenüber größeren Zugkräften anfällig, wobei sich dieses aus der Tasche lösen kann. In diesem Falle ist die Schraubverbindungsstelle zerstört.

Der Erfindung liegt die Aufgabe zu Grunde ein gattungsgemäßes Verfahren dahingehend weiterzubilden, dass in einfacher Weise die Herstellung einer haltbaren Schraubverbindungsstelle am Umfang eines Hohlprofils prozesssicher ermöglicht wird. Des Weiteren soll eine Vorrichtung zur Durchführung des Verfahrens angegeben werden.

Die Aufgabe ist erfindungsgemäß durch die Merkmale des Patentanspruches 1 hinsichtlich des Verfahrens und durch die Merkmale des Patentanspruches 7 hinsichtlich der Vorrichtung gelöst.

Durch die Widerstandsverschweißung des ein Innengewinde tragenden Anbauteils am Hohlprofil wird eine äußerst haltbare Schraubverbindungsstelle geschaffen, die auch großen mechanischen Belastungen in Zug- und Druckrichtung standhält. Auf Grund dessen, dass die Elektrode gleichzeitig das Anbauteil an den Ort der zu tätigenden Schweißverbindungsstelle heranführt, ist aus verfahrensökonomischer Sicht eine einfache Herstellung der Schraubverbindungsstelle gegeben. Dadurch, dass das Anbauteil in einem von der Elektrode und deren Führungsbohrung gebildeten Aufnahmeraum angeordnet ist, kann dieses definiert, sicher und präzise und vor allen Dingen reproduzierbar am Hohlprofil positioniert werden. Dies gilt unabhängig von Fertigungstoleranzen des Anbauteils, da die Elektrode innerhalb des Innenhochdruckumformwerkzeugs integriert ist und somit bei jedem neuen Verschweißungsvorgang immer die gleiche Stelle am Hohlprofil durch die Elektrode angefahren wird. Mittels der aufweitenden Umformung wird eine konturgetreue Anlage des Hohlprofils am Anbauteil erreicht, wodurch die Fügefläche sich über die gesamte dem Hohlprofil zugewandte Seite des Anbauteils erstreckt und somit maximalen Halt garantiert. Die Anlage aneinander ist damit nicht punktuell sondern flächig. Des Weiteren verteilt sich dadurch die Krafteinleitung bei mechanischen Belastungen, wodurch diese besser vom Hohlprofil aufgenommen werden können und die Schraubverbindungsstelle schadlos bestehen bleibt. Da das Heranführen und Positionieren des Anbauteils von der Elektrode übernommen wird, sind keine zusätzlichen Werkzeuge, die jeweils einem dieser Zwecke dienen, notwendig. Durch die Integrierung der Elektroden der Widerstandsschweißanlage in das Innenhochdruckumformwerkzeug wird der apparative Aufwand verringert und erheblich Bauraum eingespart. Weiterhin ist keine mechanische Umklammerung des Anbauteils durch das Hohlprofil erforderlich, welche eine Materialausdünnung am Hohlprofil zu Folge haben würde. Dadurch besteht bei der erfindungsgemäßen Schraubverbindungsstelle keine Rissanfälligkeit, insbesondere am Hohlprofil, während des Fügevorgangs, wobei beim erfindungsgemäßen Herstellungsverfahren eine hohe Prozesssicherheit gewährleistet ist.

In einer besonders bevorzugten Weiterbildung der Erfindung nach Anspruch 2 erfolgt die Verschweißung vor dem Lochen. Hierdurch wird verhindert, dass Druckfluid an die Schweißstelle kommt, was die Qualität der Verschweißung verschlechtern kann. Weiterhin wird erreicht, dass es bei der Herstellung der Schraubverbindungsstelle nicht vorschnell zu einem Druckabfall kommt, der gegebenenfalls beim Lochen auftritt und auf Grund des Andrucks der Elektrode zu einer Einfallstelle am Hohlprofil führt. Eine derartige Einfallstelle benachteiligt eine vollflächige Verschweißung des Anbauteils an dem Hohlprofil. Außerdem hat man zu einem besonders frühen Zeitpunkt das Anbauteil bereits am Hohlprofil unverrückbar festgelegt, so dass es keinerlei etwaige Positionierungsschwierigkeiten des Anbauteils zum Hohlprofil geben kann. Bei sehr schnell hintereinander folgenden Verfahrensschritten von Verschweißen und Lochen ergibt sich zudem der Vorteil, dass die Schweißwärme im Anschluss an die Verschweißung zumindest teilweise auf die Schweißstelle konzentriert ist, wodurch das Hohlprofilmaterial im Bereich der Schraubverbindungsstelle noch gut form- und bearbeitbar ist. Hieraus ergibt sich durch das in Folge der Wärme relativ weiche Hohlprofilmaterial eine Erleichterung des Arbeitsschrittes des Lochens.

In einer weiteren besonders bevorzugten Weiterbildung der Erfindung nach Anspruch 3 wird das Hohlprofil durch die Bohrung des Anbauteils hindurch gelocht. Hierdurch wird eine straffe Führung des Lochstempels erreicht, wodurch dieser das Hohlprofil immer an der richtigen Stelle beaufschlagt. Hierdurch ergeben sich für die Schraubverbindungsstellen sehr hohe Fertigungsgenauigkeiten.

In einer alternativen bevorzugten Ausgestaltung des erfindungsgemäßen Verfahrens nach Anspruch 4 wird das Anbauteil mittels Elektrode in die Hohlprofilwandung hineingepresst. Das Anbauteil, das mit einer stirnseitigen Schneidgeometrie versehen ist, erzeugt selbst das Loch in der Hohlprofilwandung. Anschließend erfolgt die Verschweißung mit dem Hohlprofil. Bei dieser Variante der Erfindung erhält das Anbauteil bei Hineinpressung in die Hohlprofilwandung seine exakte Relativlage zum Hohlprofil. Durch die vorläufige, jedoch präzise Festlegung des Anbauteils am Hohlprofil und die gleichzeitige Erzeugung eines Loches durch das Anbauteil wird das gesamte Herstellungsverfahren vereinfacht, da das Anbauteil in seiner Einpresslage praktisch nicht mehr gehalten und am Hohlprofil angedrückt zu werden braucht. Der Herstellungsvorgang wird beschleunigt, da die Locherzeugung bereits zum Zeitpunkt der Positionierung des Anbauteils am Hohlprofil erfolgt. Dadurch, dass das Anbauteil bereits in der Hohlprofilwandung bereits eingepresst ist, müssen keine zusätzlichen mechanischen Schweißdrücke bei der anschließenden endgültigen Festlegung des Anbauteils am Hohlprofil durch Widerstandsschweißung aufgebracht werden, was wiederum die Schweißanlage vereinfacht, da entsprechende Anpressvorrichtungen entfallen. Um das Hohlprofil beim Lochen möglichst dicht zu halten, weist der am Anbauteil ausgebildete eingepresste Stutzen einen zum Inneren Hohlprofils leicht konisch verjüngten Verlauf auf. Bei der entsprechenden vorteilhaften Weiterbildung der erfindungsgemäßen Vorrichtung nach Anspruch 9, bildet die Elektrode den Stempel selbst, an dessen Stirnseite das Anbauteil anliegt. Das Anbauteil weist wie schon gesagt eine zum Hohlprofil gewandte Schneidgeometrie auf. Die Elektrode bildet hierbei keinen Lochstempel im ureigenen Sinne, sondern einen Stempel, der das Anbauteil in das Hohlprofil hineinpressen kann. Ein separater Lochstempel entfällt völlig, da die Schneidgeometrie in vorteilhafter Weise am Anbauteil selbst angebracht ist und dieses damit die Funktion des Lochstempels übernimmt. Durch den Entfall des Lochstempels wird zusätzlich die Steuerung der Vorrichtung zur Herstellung der Schraubverbindungsstelle vereinfacht.

In einer bevorzugten Weiterbildung der Erfindung nach Anspruch 5 erfolgt das Lochen von außen nach innen durch Materialverdrängung des Hohlprofilmaterials. In entsprechender Anlehnung daran besitzt nach der bevorzugten Weiterbildung der erfindungsgemäßen Vorrichtung gemäß Anspruch 11 der Stempel an seinem freien Ende eine pfeilförmige Spitze. Auf Grund der Materialverdrängung des Hohlprofils, die in Zusammenwirkung des Innenhochdrucks mit der pfeilförmigen Spitze des in das Hohlprofil zum Lochen eindringenden Stempels ausgeführt wird, fällt kein Lochbutzen an, der aufwendig zu entsorgen wäre. Gleichzeitig bildet der durchstoßene Verdrängungswulst eine Verlängerung der Führung für eine in das Anbauteil und das Hohlprofil hinein geschraubte Schraube. Diese kann dann beispielsweise mit ihrem Gewinde ein Innengewinde in den Verdrängungswulst beim Einschrauben hinein schneiden.

In einer weiteren bevorzugten Weiterbildung der Erfindung nach Anspruch 6 wird beim Lochen ein Lochbutzen aus der Hohlprofilwandung von außen nach innen herausgetrennt. Durch die Erzeugung eines Lochbutzens wird ein hochpräzises Lochmaß erzielt. Zudem wird dadurch verhindert, dass Einzüge entstehen, die die Anlagefläche des Hohlprofils am Anbauteil verringern. Unter der damit einhergehenden Beibehaltung der ganzen zur Verfügung stehenden Fläche des Hohlprofils für die Fügeverbindung mit dem Anbauteil wird diese, wenn sie bereits erfolgt ist, nicht beschädigt, und wenn sie noch nicht erfolgt ist, wird ihr auf Grund der maximal gebliebenen Anlagefläche mit dem Schweißvorgang eine besonders gute Haltbarkeit verliehen.

In einer weiteren besonders bevorzugten Ausgestaltung der erfindungsgemäßen Vorrichtung nach Anspruch 8 umgibt die in der Führungsbohrung angeordnete Elektrode den Stempel konzentrisch. Hierdurch wird erreicht, dass der Stempel genau der Bohrung des Anbauteils zugeführt wird, welches im Aufnahmeraum selbst koaxial zur Elektrode liegt. Dadurch wird eine Kollision des Stempels mit dem Anbauteil vermieden. Durch die nahezu spielfreie Einfassung des Stempels durch die Elektrode ist der Stempel in der Elektrode straff und sicher geführt.

In einer weiteren besonders bevorzugten Weiterbildung der Erfindung nach Anspruch 10 ist eine der Elektroden durch das Innenhochdruckumformwerkzeug selbst gebildet. Dies verringert den apparativen Aufwand zur Anordnung der Vorrichtung ganz erheblich, da die zweite Elektrode nicht noch zusätzlich in die Vorrichtung beziehungsweise in das Innenhochdruckumformwerkzeug eingebracht werden muss. Da das Innenhochdruckumformwerkzeug ohnehin aus einem leitfähigen Metall insbesondere Eisen oder aus einem Stahl besteht, ist es einfach, dieses mit einem elektrischen Pol zu verbinden. Vorteilhafterweise kann dieser an jeder belieben Stelle des Umformwerkzeugs angebracht werden, so dass der elektrische Anschluss an der Stelle angeordnet werden kann, der dem Anlagenbauer als am besten geeignet erscheint. Durch den Entfall einer separaten Elektrode wird die Bauteilanzahl der Vorrichtung verringert, was diese wiederum vereinfacht.

Im Übrigen soll hier noch angemerkt sein, dass durch die Anschweißung des Anbauteils am Hohlprofil vor dem Lochvorgang das Hohlprofil durch das Anbauteil verstärkt wird, was einer Eindrückbewegung der Hohlprofilwandung bei der Beaufschlagung durch den Lochstempel entgegenwirkt. Somit wird erreicht, dass die Hohlprofilwandung nicht unerwünscht einfällt.

Vorteilhafter Weise soll zum Widerstandsschweißen das Kondensatorentladungsschweißen verwandt werden. Dieses Verfahren zeichnet sich durch einen schnellen Stromanstieg mit einem nur Millisekunden dauernden Hochstromimpuls von mehreren hunderttausend Ampere, eine kurze Schweißzeit und hohe Schweißströme aus. Die Anwendung dieses Verfahrens zur Verbindung des Anbauteils am Hohlprofil hat zur Folge, dass keine Kühlung für die Verschweißung notwendig ist und das Schweißen ohne Ausglühen und Verzug erfolgt, wodurch die fertig bearbeiteten Teile nach dem Schweißen ihre Maßgenauigkeit beibehalten. Mit dem Schweißverfahren ist der Einsatz von wärmeempfindlichen Teilen, beschichteten Metallen, Stählen mit einem Kohlenstoffgehalt, der größer als 0,2 Prozent ist, und von unterschiedlichen Materialdicken der beiden Fügepartner prozesssicher und unter Erreichung einer hohen mechanisch belastbaren Fügequalität möglich. Die Qualitätsüberwachung mit Protokollierung der Schweißdaten (Kraft, Energie, Schweißstrom und Schmelzung) ist sehr einfach. Gleichzeitig wird durch die Verwendung von Speicherkondensatoren das zur Verfügung stehende elektrische Netz nur gering belastet.

Im Folgenden ist die Erfindung anhand mehrerer in den Zeichnungen dargestellter Ausführungsbeispiele näher erläutert.

Dabei zeigen:
- Fig. 1: In einer Querschnittsdarstellung eine erfindungsgemäße Vorrichtung während des Lochvorgangs unter Erzeugung eines Lochbutzens,
- Fig. 2: in einer Querschnittsdarstellung eine erfindungsgemäße Vorrichtung während der Lochbildung durch stempelbedingte Materialverdrängung,
- Fig. 3: in einer Querschnittsdarstellung eine erfindungsgemäße Vorrichtung mit einem in eine Hohlprofilwandung eingepressten Anbauteil unter Ausbildung eines Lochbutzens.

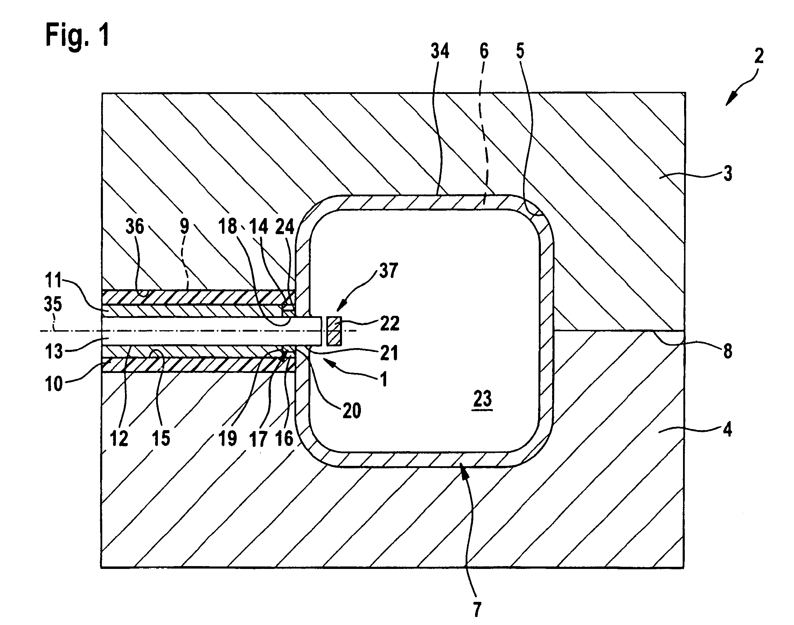

In Figur 1 ist eine Vorrichtung zur Herstellung einer Schraubverbindungsstelle 1 am Umfang 34 eines Hohlprofils 7 dargestellt. Die Vorrichtung beinhaltet ein Innenhochdruckumformwerkzeug 2, welches aus einem Oberwerkzeug 3 und einem Unterwerkzeug 4 besteht. An den einander zugewandten Seiten der Werkzeuge 3 und 4 ist eine Gravur 5 eingearbeitet, die bei geschlossenem Werkzeug 2, das heißt, wenn das Oberwerkzeug 3 am Unterwerkzeug 4 anliegt, einen Formraum 6 begrenzt. In diesem Formraum 6 ist das Hohlprofil 7 zur Umformung und Lochung aufgenommen. In die einander zugewandten Seiten des Oberwerkzeugs 3 und des Unterwerkzeugs 4 ist eine Führungsbohrung 9 eingearbeitet, deren Achse 35 in der Ebene der Trennfuge 8 der beiden Werkzeuge 3 und 4 liegt. Die Führungsbohrung 9 führt einerseits aus dem Innenhochdruckumformwerkzeug 2 hinaus und andererseits mündet sie in die Gravur 5 des Umformwerkzeugs 2. In der Führungsbohrung 9 ist eine elektrisch isolierende Hülse 10 eingesetzt, die sich über die gesamte Führungsbohrung 9 erstreckt und an deren Wandung 36 eng anliegt. In der Hülse 10 ist eine Elektrode 11 einer elektrischen Widerstandsschweißanlage der erfindungsgemäßen Vorrichtung mit geringem Spiel verschiebbar geführt. Die Elektrode 11 begrenzt mit ihrer Stirnseite 14 und der Innenseite 15 der Hülse 10 einen Aufnahmeraum 16, in dem ein Anbauteil 17 koaxial zur Elektrode 11 angeordnet ist. Der Aufnahmeraum 16 ist zur Gravur 5, beziehungsweise zum Hohlprofil 7 hin offen gestaltet. Die Elektrode 11 weist eine zentrale Durchführung 12 auf, die von einem Stempel 13 durchsetzt ist. Die Elektrode 11 umgibt dabei den Stempel 13 konzentrisch, wobei dieser in der Durchführung 12 verschiebbar angetrieben ist.

Zur Herstellung der Schraubverbindungsstelle 1 wird zuerst ein Hohlprofilrohling in den Formraum 6 des Innenhochdruckumformwerkzeugs 2 eingebracht und durch Erzeugen eines fluidischen Innenhochdruckes im Inneren 23 des Hohlprofilrohlings aufgeweitet, bis dieser konturgetreu an die Gravur 5 des Innenhochdruckumformwerkzeugs 2 angepresst wird. Alsdann wird der Aufnahmeraum 16 mit einem Anbauteil 17, welches eine zentrale mit einem Innengewinde versehene Durchgangsbohrung 18 aufweist, bestückt. Das Anbauteil 17, das auf das aus der Elektrode 11 herausragende Ende 37 des Stempels 13 aufgefädelt ist, wird in einer Vorschubbewegung der Elektrode 11 gemeinsam mit dem Stempel 13 so an das Hohlprofil 7 herangefahren, dass es zwischen diesem und der Stirnseite 14 der Elektrode 11 eingefasst ist, wobei das Anbauteil 17 mit seiner der Elektrode 11 zugewandten Stirnseite 19 an der Stirnseite 14 der Elektrode 11 und mit seiner dem Hohlprofil 7 zugewandten Stirnseite 20 an dessen Umfang 34 angepresst wird. In diesem Zustand wird nun die elektrische Widerstandsschweißanlage in Gang gesetzt, wobei ein elektrischer Pol an das Innenhochdruckumformwerkzeug 2, also entweder das Oberwerkzeug 3 oder das Unterwerkzeug 4, angelegt wird, so dass das jeweilige Werkzeugteil die andere Elektrode der Widerstandsschweißanlage bildet. Unter dem erzeugten elektrischen Stromfluss wird damit das Anbauteil 17 am Umfang 34 des Hohlprofils 7 unter Ausbildung einer Schweißverbindung 24 angeschweißt. Sobald das Anbauteil 17 durch die Schweißverbindung 24 fest am Hohlprofil 7 angebracht ist, fährt der Stempel 13, der als Stanzstempel ausgebildet ist, nach vorne in Richtung Hohlprofil 7, wobei er durch die Bohrung 18 des Anbauteil 17 hindurch fährt und aus dem Hohlprofil 7 ein Wandungsstück, das einen Lochbutzen 22 bildet, unter Ausbildung des Loches 21 in das Innere 23 des Hohlprofils 7 hineinstanzt. Dies erfolgt bei Innenhochdruck im Inneren 23 des Hohlprofils 7. Nach erfolgter Lochbildung wird anschließend der fluidische Innenhochdruck im Hohlprofil 7 entspannt und der Stempel 13 aus dem Formraum 6 beziehungsweise dem Inneren 23 des Hohlprofils 7 herausgezogen. Der Lochbutzen 22 fällt dabei in das Innere 23 des Hohlprofils 7 hinein. Das Innenhochdruckumformwerkzeug 2 kann nun geöffnet werden und das Hohlprofil 7 mit der von dem Anbauteil 17 und dem Lochbereich der gelochten Hohlprofilwandung gebildeten Schraubverbindungsstelle 1 dem Umformwerkzeug 2 entnommen werden. Um die Schraubverbindungsstelle 1 ihrem Zweck zuzuführen, kann nun eine Schraube oder ein Bolzen mit Außengewinde in diese eingeschraubt werden.

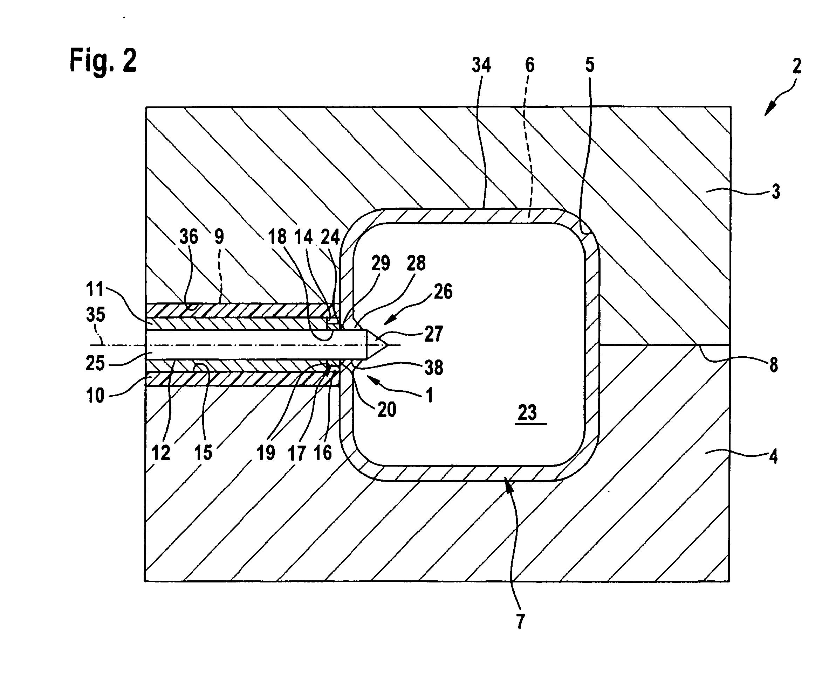

Abweichend vom vorangegangenen Ausführungsbeispiel ist der mit dem Stempel 13 vergleichbare Stempel 25 in einer neuen Variante der Erfindung am freien Ende 26 mit einer pfeilförmigen Spitze 27 ausgebildet (Figur 2). Zur Erzeugung eines Loches 38 wird nach Anschweißung des Anbauteils 17 am Hohlprofil 7 der Stempel 25 auf das Hohlprofil 7 gefahren, wobei dieser mit seiner Spitze 27 die Wandung des Hohlprofils 7 durchdringt. Unter der entgegenwirkenden Kraft des im Inneren 23 des Hohlprofils 7 herrschenden Innenhochdrucks wird das vom Stempel 25 beaufschlagte Hohlprofilmaterial unter Ausbildung eines Hohlprofilwulstes 28 zur Seite weg verdrängt. Gleichzeitig entsteht eine Einfallmulde 29, die sich am Außenumfang 34 des Hohlprofils 7 unterhalb des Anbauteils 17 ausbildet. Das in diesem Ausführungsbeispiel geschilderte Verfahren erzeugt damit ein Loch 38 ohne Lochbutzen 22. Zur Entnahme des Hohlprofils 7 wird wie beim Stanzstempel 13 des vorangegangenen Ausführungsbeispiels der Stempel 25 aus dem Hohlprofil 7 heraus zurückgezogen und zwar so, dass er auch von der Bohrung 18 des Anbauteils 17 beabstandet ist. Der fluidische Innenhochdruck wird selbstverständlich vor dem Öffnen des Innenhochdruckumformwerkzeugs 2 entspannt und das Druckfluid abgeführt.

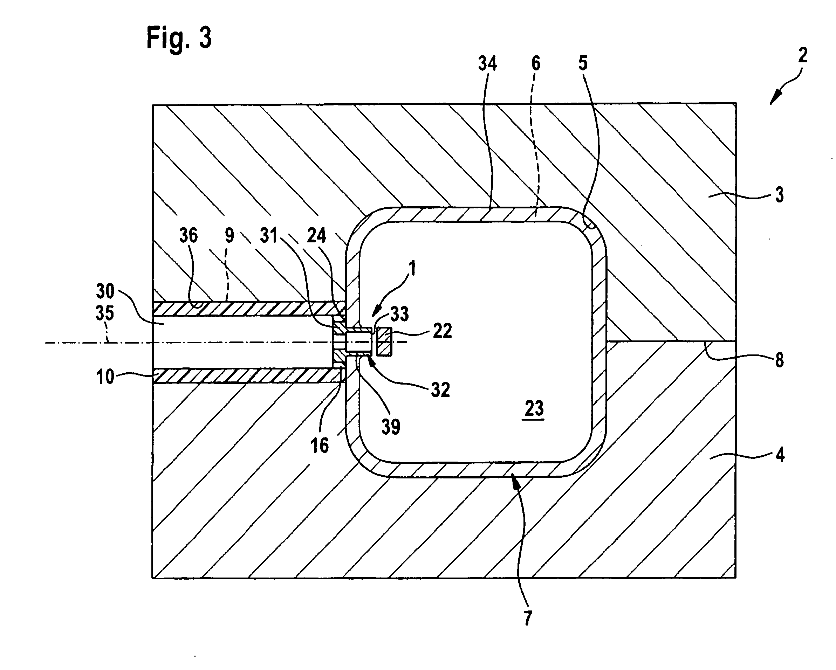

Eine weitere Variante der Erfindung zeigt Figur 3. Dort ist die Elektrode 30 massiv ausgebildet und weist keine Bohrung auf. Das Anbauteil 31 ist nach Vorbild einer Stanzmutter ausgebildet. Im Gegensatz zu den beiden vorangegangenen Ausführungsbeispielen erfolgt hier nicht zuerst die Anschweißung des Anbauteils 31 sondern die Lochung des Hohlprofils 7. Die Elektrode 30, die dabei die Rolle eines Stempels übernimmt, drückt das Anbauteil 31 derart gegen die Wandung des Hohlprofils 7, dass ein mit einer Schneidgeometrie 33 versehener Stutzen 32 des Anbauteils 31 in die Hohlprofilwandung hineingepresst wird, wobei gleichzeitig ein Lochbutzen 22 und das Loch 39 entsteht. Das so in der Hohlprofilwandung fixierte Anbauteil 31 wird nun mir diesem widerstandsverschweißt. Zur Gewährleistung der Dichtheit des Hohlprofils 7 nach außen unter dem weiterwirkenden Innenhochdruck ist der Stutzen 32 zum Hohlprofilinneren 23 hin leicht konisch verjüngt ausgebildet, so dass an den Rändern des erzeugten Loches 39 Keilflächen entstehen, die mit der konischen Gestaltung des Stutzens 32 eine besonders gute Dichtfähigkeit bewirken.

In allen drei genannten Ausführungsbeispielen ist es denkbar, dass die elektrisch isolierende Hülse 10 ebenfalls in der Führungsbohrung 9 verschiebbar ist. Dies ist dann besonders hilfreich, wenn das Hohlprofil 7 mit der erzeugten Schraubverbindungsstelle 1 behinderungsfrei aus dem Innenhochdruckumformwerkzeug 2 entnommen werden soll. Das Hohlprofil 7 kann dabei in einfacher Weise bei geöffnetem Innenhochdruckumformwerkzeug 2 in einer Hubbewegung aus dem Formraum 6 herausgelöst werden, wobei die Hülse 10 in einer von der Schraubverbindungsstelle 1 beziehungsweise dem Anbauteil 17, 31 zurückgezogenen Position verharrt.

## Patentansprüche

1. Verfahren zur Herstellung einer Schraubverbindungsstelle am Umfang eines Hohlprofils, das mittels fluidischen Innenhochdrucks aufgeweitet wird, wobei im Innenhochdruckumformwerkzeug am Hohlprofil ein Anbauteil mit einer ein Innengewinde tragenden Bohrung angebracht wird und das Hohlprofil fluchtend mit der Bohrung gelocht wird,
**dadurch gekennzeichnet, dass**
das Anbauteil (17,31) mittels einer in das Innenhochdruckumformwerkzeug (2) integrierten Elektrode (11,30) an das Hohlprofil (7) herangeführt wird, und dass das Anbauteil (17,31) mit dem Hohlprofil (7) nach dessen Anlage an der Werkzeuggravur (5) im Bereich der zu bildenden Schraubverbindungsstelle (1) über die Elektrode (11,30) widerstandsverschweißt wird.

2. Verfahren nach Anspruch 1,
**dadurch gekennzeichnet, dass**
die Verschweißung vor dem Lochen erfolgt.

3. Verfahren nach einem der Ansprüche 1 oder 2,
**dadurch gekennzeichnet, dass**
das Hohlprofil (7) durch die Bohrung (18) des Anbauteils
(17,31) hindurch gelocht wird.

4. Verfahren nach Anspruch 1,
**dadurch gekennzeichnet, dass**
das Anbauteil (31) mittels der Elektrode (30) in die Hohlprofilwandung hineingepresst wird, dass das Anbauteil (31) mit einer stirnseitigen Schneidgeometrie (33) das Loch (39) in der Hohlprofilwandung erzeugt, und dass anschließend die Verschweißung erfolgt.

5. Verfahren nach einem der Ansprüche 1 bis 4,
**dadurch gekennzeichnet, dass**
das Lochen von außen nach innen durch Materialverdrängung des Hohlprofilmaterials erfolgt.

6. Verfahren nach einem der Ansprüche 1 bis 4,
**dadurch gekennzeichnet, dass**
beim Lochen ein Lochbutzen (22) aus der Hohlprofilwandung von außen nach innen herausgetrennt wird.

7. Vorrichtung zur Herstellung einer Schraubverbindungsstelle am Umfang eines Hohlprofils, mit einem Innenhochdruckumformwerkzeug, in dessen von der Umformwerkzeuggravur gebildeten Formraum das Hohlprofil zur Aufweitung mittels fluidischen Innenhochdrucks angeordnet ist, mit einem Stempel zum Lochen der Hohlprofilwandung am Ort der auszubildenden Schraubverbindungsstelle, welcher in einer in die Umformwerkzeuggravur mündenden Führungsbohrung des Umformwerkzeuges verschiebbar geführt ist, wobei in der Führungsbohrung ein Anbauteil mit einer ein Innengewinde tragenden Bohrung aufgenommen ist,
**dadurch gekennzeichnet, dass**
die Vorrichtung zusätzlich eine Widerstandsschweißanlage beinhaltet, deren Elektroden (11,30) im Innenhochdruckumformwerkzeug (2) integriert sind, dass zumindest eine der Elektroden (11,30) in der Führungsbohrung (9) angeordnet ist, die in dieser mit ihrer Stirnseite (14) einen zum Hohlprofil (7) offenen Aufnahmeraum (16) begrenzt, in dem das Anbauteil (17,31) angeordnet ist.

8. Vorrichtung nach Anspruch 7,
**dadurch gekennzeichnet, dass**
die in der Führungsbohrung (9) angeordnete Elektrode (11) den Stempel (13,25) konzentrisch umgibt.

9. Vorrichtung nach Anspruch 7,
**dadurch gekennzeichnet, dass**
die Elektrode (30) den Stempel bildet, an dessen Stirnseite das Anbauteil (31) anliegt, welches eine zum Hohlprofil (7) gewandte Schneidgeometrie (33) aufweist.

10. Vorrichtung nach einem der Ansprüche 7 bis 9,
**dadurch gekennzeichnet, dass**
eine der Elektroden durch das Innenhochdruckumformwerkzeug (2) selbst gebildet ist.

11. Vorrichtung nach einem der Ansprüche 7, 8 oder 10,
**dadurch gekennzeichnet, dass**
der Stempel (25) an seinem freien Ende (26) eine pfeilförmige Spitze (27) besitzt.

## Claims

1. Method for producing a screw connection point on the periphery of a hollow profile, which is expanded by internal high pressure fluid, wherein an attachment with a bore having an inner thread is mounted to the hollow profile in the hydroforming mould, and the hollow profile is bored in alignment with the bore,
**characterized in that**
the attachment (17, 31) is guided to the hollow profile (7) by means of an electrode (11, 30) integrated in the hydroforming mould (2), and that the attachment (17, 31) is resistance-welded to the hollow profile (7) by means of the electrode (11, 30) after its abutment to the mould relief (5) in the region of the screw connection point (1) to be formed.

2. Method according to claim 1,
**characterized in that**
the welding takes place prior to the boring.

3. Method according to one of claims 1 or 2,
**characterized in that**
the hollow profile (7) is bored through the bore (18) of the attachment (17, 31).

4. Method according to claim 1,
**characterized in that**
the attachment (31) is pressed into the hollow profile wall by means of the electrode, that the attachment (31) generates the hole (39) in the hollow profile wall by means of the electrode with a cutting geometry (33) on the face side, and that the welding takes place subsequently.

5. Method according to one of claims 1 to 4,
**characterized in that**
the boring takes place from the outside to the inside by material displacement of the hollow profile material.

6. Method according to one of claims 1 to 4,
**characterized in that**
a centre cut-off (22) is separated from the hollow profile wall during boring from the outside to the inside.

7. Device for producing a screw connection point on the periphery of a hollow profile, with a hydroforming mould, in whose moulding space, which is formed by the mould relief, is arranged the hollow profile for expanding by means of internal high pressure fluid, with a die for boring the hollow profile wall at the location of the screw connection point to be formed, which is guided in a displaceable manner in a guide bore of the mould leading into the mould relief, wherein an attachment with a bore having an inner thread is received in the guide bore,
**characterized in that**
the device additionally contains a resistance welding arrangement, whose electrodes (11, 30) are integrated in the hydroforming mould (2), that at least one of the electrodes (11, 30) is arranged in the guide bore (9), which limits a reception space (16) open towards the hollow profile (7) with its front face (14) therein, in which is arranged the attachment (17, 31).

8. Device according to claim 7,
**characterized in that**
the electrode (11) arranged in the guide bore (9) surrounds the die (13, 25) in a concentric manner.

9. Device according to claim 7,
**characterized in that**
the electrode (30) forms the die, at whose face the attachment (31) abuts, which comprises a cutting geometry (33) facing the hollow profile (7).

10. Device according to one of claims 7 to 9,
**characterized in that**
one of the electrodes is formed by the hydroforming mould (2) itself.

11. Device according to one of claims 7, 8 or 10,
**characterized in that**
the die (25) has an arrow-shaped tip (27) at its free end.

## Revendications

1. Procédé de fabrication d'un site d'assemblage par vissage sur la périphérie d'un profilé creux qui est agrandi sous l'effet d'un fluide interne à haute pression, dans l'outil de façonnage à haute pression interne sur le profilé creux, une pièce rapportée est pourvue d'un trou taraudé et le profilé creux est troué en alignement avec le trou, **caractérisé en ce que** la pièce rapportée (17, 31) est rapprochée du profilé creux (7) au moyen d'une électrode (11, 30) intégrée dans l'outil de façonnage à haute pression interne (2), et **en ce qu'**une fois le profilé creux (7) appuyé sur le relief (5) de l'outil de façonnage dans la zone du site d'assemblage par vissage (1) à former, la pièce rapportée (17, 31) est soudée par résistance au profilé creux (7) par l'intermédiaire de l'électrode (11, 30).

2. Procédé selon la revendication 1, **caractérisé en ce que** la soudure est réalisée avant le perçage.

3. Procédé selon l'une des revendications 1 ou 2, **caractérisé en ce que** le profilé creux (7) est troué de part en part par le perçage (18) de la pièce rapportée (17, 31).

4. Procédé selon la revendication 1, **caractérisé en ce que** la pièce rapportée (31) est introduite par pression dans la paroi du profilé creux à l'aide de l'électrode (30) et **en ce que** la pièce rapportée (31) avec une géométrie de coupe (33) sur la surface avant réalise le trou (39) dans la paroi du profilé creux, et **en ce que** la soudure est ensuite réalisée.

5. Procédé selon l'une des revendications 1 à 4, **caractérisé en ce que** le profilé creux est percé par refoulement de matériel de l'extérieur vers l'intérieur.

6. Procédé selon l'une des revendications 1 à 4, **caractérisé en ce que** lors du perçage une partie découpée (22) est extraite de la paroi du profilé creux de l'extérieur vers l'intérieur.

7. Dispositif de fabrication d'un site d'assemblage par vissage sur la périphérie d'un profilé creux comportant un outil de formage à haute pression interne présentant un espace de formage formé par la gravure de l'outil de formage dans lequel est disposé le profilé creux pour être agrandi sous l'effet d'un fluide interne à haute pression, un poinçon permettant de trouer la paroi du profilé creux à l'endroit du site d'assemblage par vissage à former, lequel est guidé de façon à pouvoir se déplacer dans un trou de guidage de l'outil de formage qui débouche dans la gravure de l'outil de formage, une pièce rapportée pourvue d'un trou taraudé étant reçue dans un trou de guidage, **caractérisé en ce que** le dispositif comprend également une installation de soudage par résistance dont les électrodes (11, 30) sont intégrées dans l'outil de formage à haute pression interne (2), **en ce qu'**au moins l'une des électrodes (11, 30) est disposée dans le trou de guidage (9) qui limite dans celui-ci au moyen de sa surface avant (14) un logement (16) ouvert sur le profilé creux (7), dans lequel est disposée la pièce rapportée (17, 31).

8. Dispositif selon la revendication 7, **caractérisé en ce que** l'électrode (11) disposée dans le trou de guidage (9) entoure de manière concentrique le poinçon (13, 25).

9. Dispositif selon la revendication 7, **caractérisé en ce que** l'électrode (30) forme le poinçon sur la surface avant duquel est posée la partie rapportée (31) qui présente une géométrie de coupe (33) orientée vers le profilé creux (7).

10. Dispositif selon l'une quelconque des revendications 7 à 9, **caractérisé en ce que** l'une des électrodes est elle-même formée par l'outil de formage à haute pression interne (2).

11. Dispositif selon l'une quelconque des revendications 7, 8 ou 10, **caractérisé en ce que** le poinçon (25) possède sur son extrémité libre (26) une pointe (27) en forme de flèche.
